Europäisches Patentamt

**European Patent Office**

**Office européen des brevets**

(19)

(11) Numéro de publication : **0 021 914**
**B1**

(12)

# FASCICULE DE BREVET EUROPÉEN

(45) Date de publication du fascicule du brevet :
**05.01.83**

(21) Numéro de dépôt : **80400796.1**

(22) Date de dépôt : **04.06.80**

(51) Int. Cl.³ : **B 60 S   1/34**

(54) **Essuie-glace, notamment pour véhicules automobiles.**

(30) Priorité : **13.06.79 FR 7915096**

(43) Date de publication de la demande :
**07.01.81 Bulletin 81/01**

(45) Mention de la délivrance du brevet :
**05.01.83 Bulletin 83/01**

(84) Etats contractants désignés :
**DE GB IT**

(56) Documents cités :
**FR A 1 171 426**
**US A 2 795 809**
**US A 2 901 765**
**US A 3 019 469**

(73) Titulaire : **DUCELLIER & Cie**
**Echat 950**
**F-94024 Créteil Cedex (FR)**

(72) Inventeur : **Baudry, Jean Louis**
**13, Boulevard Napoléon**
**F-10500 Brienne le Chateau (FR)**

(74) Mandataire : **Habert, Roger**
**c/o Ducellier & Cie 2, rue Boulle Echat 950**
**F-94024 Créteil Cedex (FR)**

Essuie-glace, notamment, pour véhicules automobiles

La présente invention concerne un essuie-glace notamment pour véhicules automobiles comportant, une tête d'entraînement sur laquelle est articulé un bras porte-balai, un ressort hélicoïdal qui engendre la force nécessaire pour l'application du balai d'essuie-glace contre un pare-brise de forme panoramique, un arbre d'entraînement à extrémité filetée tourillonnant dans le fût d'une platine support fixée sur la carrosserie et sur lequel arbre est fixé un entraîneur de la tête par l'intermédiaire d'un écrou de blocage, laquelle tête prend appui et pivote sur une douille fixe traversée par l'arbre d'entraînement et comportant une came frontale de manière à modifier, en cours de balayage, l'angle d'inclinaison du bras par rapport à l'arbre pour assurer automatiquement une perpendicularité de la lame du balai en tout point du pare-brise quel que soit l'angle de balayage du bras.

C'est l'utilisation des pare-brise panoramiques qui a donné naissance à ces exigences.

En effet les dispositifs classiques d'essuyage ont une cinématique régulière qui fait se déplacer le balai suivant un angle identique par rapport au galbe du pare-brise quel que soit sa position sur celui-ci et cela a pour inconvénient de faire brouter le balai dans les parties extrêmes du pare-brise car la perpendicularité dudit balai par rapport au pare-brise n'est pas assurée et il attaque donc ce dernier avec un angle de plus en plus aigu.

L'utilisation de tels pare-brise entraîne également un autre inconvénient, à savoir une pression variable et allant en s'affaiblissant vers les parties extrêmes du pare-brise donc moins bombées car le ressort travaillant en traction sur le balai en appui sur le pare-brise, sera moins sollicité vers les parties latérales plus basses.

Pour remédier à ces inconvénients il est connu un brevet FR-A-1 171 426 montrant un dispositif permettant d'obtenir une orthogonalité automatique et constante ainsi qu'une modification de la pression du balai quel que soit sa position sur le pare-brise.

Ce dispositif connu est essentiellement remarquable en ce que le porte-balai se compose de deux parties dont l'une mobile porte le balai et l'autre fixe porte la tête d'entraînement entraînée en rotation par l'axe d'entraînement.

Ces deux parties sont articulées entre elles autour d'une charnière oblique par rapport à l'axe longitudinal du porte-balai et reliées par un ressort agissant en traction entre les deux parties de manière à faire pivoter celler portant le balai suivant un angle tel à assurer l'orthogonalité du balai en tout points du pare-brise et une pression variable pendant sa course.

Si ce dispositif permet de remédier aux premiers inconvénients cités, il en crée d'autres à savoir une complexité de réalisation d'où un prix de revient élevé dû au nombre de pièces constitutives à réaliser et à assembler.

De plus, il est préférable d'avoir une pression sensiblement constante sur le pare-brise afin qu'il soit essuyé de manière uniforme. Il en est de même pour les dispositifs décrit dans les brevets US-A-3 019 469 et US-A-2 795 805 qui outre leur complexité de réalisation ne permettent d'obtenir respectivement qu'une perpendicularité constante pour l'un et une pression relativement constante pour l'autre.

La présente invention a pour but de remédier à ces inconvénients, c'est-à-dire concevoir un dispositif de réalisation simple permettant d'assurer au balai d'essuie-glace à la fois une perpendicularité et une pression constante sur le pare-brise.

L'invention concerne, à cet effet, un essuie-glace notamment pour véhicules automobiles comportant, une tête d'entraînement sur laquelle est articulé un bras porte-balai, un ressort hélicoïdal qui engendre la force nécessaire pour l'application du balai d'essuie-glace contre un pare-brise de forme panoramique, un arbre d'entraînement à extrémité filetée tourillonnant dans le fût d'une platine support fixée sur la carrosserie et sur lequel arbre est fixé un entraîneur de la tête par l'intermédiaire d'un écrou de blocage, laquelle tête prend appui et pivote sur une douille fixe traversée par l'arbre d'entraînement et comportant une came frontale de manière à modifier, en cours de balayage, l'angle d'inclinaison du bras par rapport à l'arbre pour assurer automatiquement une perpendicularité de la lame du balai en tout point du pare-brise quel que soit l'angle de balayage du bras caractérisé en ce que le plan d'appui de la tête d'entraînement sur la came frontale de la douille fixe est constitué par une came complémentaire, cames formées par deux pans obliques à l'axe de l'arbre d'entraînement dont l'orientation et l'inclinaison α sont telles qu'elles engendrent respectivement une perpendicularité et une pression relativement constantes de la lame en tout point du pare-brise.

D'autres caractéristiques ressortiront de la description qui va suivre en fonction des dessins annexés.

La figure 1 représente un dispositif d'essuie-glace représenté partiellement en coupe et muni d'une tête d'entraînement suivant l'invention.

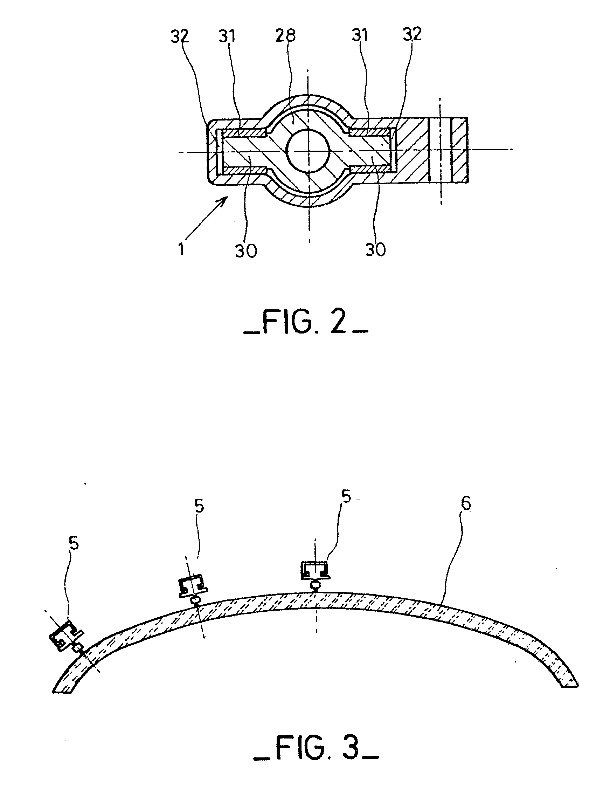

La figure 2 est une vue de dessus en coupe du dispositif suivant la ligne II de la figure 1.

La figure 3 est une coupe du pare-brise montrant schématiquement l'orthogonalité de la lame sur le pare-brise obtenu par le dispositif suivant l'invention.

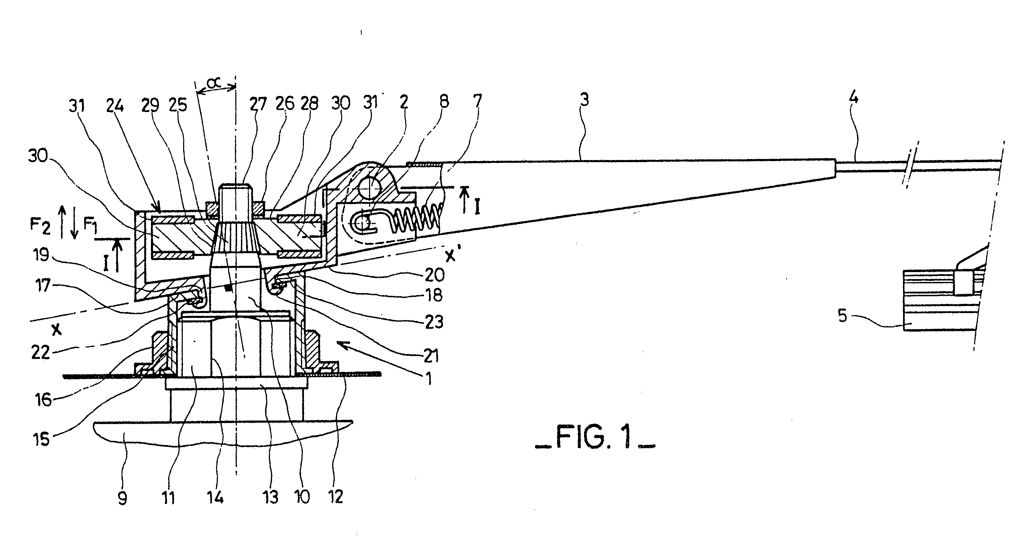

Le dispositif d'essuie-glace représenté à la figure 1 comporte une tête d'entraînement 1, désignée dans son ensemble, sur laquelle est articulé, autour de l'axe 2, un carter 3 se prolongeant par un bras porte-balai 4 à l'extrémité duquel s'articule un balai 5 appliqué sur un pare-brise panoramique 6 grâce à la force engendrée par un ressort hélicoïdal 7 disposé entre un point d'accrochage du bras et un axe 8 de la tête d'entraînement 1.

Le dispositif d'essuie-glace est entraîné par un moto réducteur (non représenté) fixé sur une platine 9 et dont l'axe de sortie constitue l'arbre d'entraînement 10 traversant un fût 11 de la platine 9 dans lequel il tourillonne et qui traverse la carrosserie 12 par l'intermédiaire d'un trou sur les bords intérieurs duquel prend appui un épaulement 13 du fût 11.

Le fût 11 comporte un méplat 14 permettant de retenir en rotation une douille 15 coiffant ledit fût 11, de forme correspondante. La douille 15 comporte un filetage extérieur conique sur lequel se visse un écrou 16 de manière à immobiliser ladite douille 15 en translation, par serrage sur le fût.

La douille 15 comporte à sa partie supérieure une came frontale constituée dans le présent mode de réalisation par un pan oblique 17 sur lequel prend appui et pivote la tête d'entraînement 1, elle-même munie d'un pan oblique 20 complémentaire.

Les pans obliques 17 et 20 sont inclinés par rapport à l'axe de l'arbre 10 suivant un angle α et une orientation par rapport au pare-brise de manière à engendrer une pression et une perpendicularité sensiblement constantes du balai 5 en tous points du pare-brise.

La surface frontale constituant le pan oblique 17 comporte un alésage 18 dans lequel pivote un tourillon 19 creux obtenu de matière sur le pan oblique 20 de la tête d'entraînement 1.

Le tourillon 19 se termine à sa partie inférieure par un bourrelet annulaire 21 rabattu par évasement, après insertion d'une rondelle de friction 22, contre le bord interne 23 du pan oblique 17, de manière à assurer la retenue axiale de la douille 15 sur la tête d'entraînement 1 tout en lui conservant sa libre rotation.

La tête d'entraînement 1 est ainsi solidarisée axialement de la douille 15, elle-même solidarisée du fût 11.

L'entraînement en rotation de la tête 1, d'où du bras porte-balai 4 par rapport à l'axe de l'arbre 10, s'effectue par l'intermédiaire d'un entraîneur 24 fixé sur une partie conique cannelée 25 de l'arbre 10 et effectivement immobilisé sur ladite partie conique 25 par un écrou de blocage 26 se vissant à l'extrémité 27 de l'arbre 10.

L'entraîneur 24 se présente sous la forme générale d'une bague centrale 28 emmanchée sur la partie conique 25 de l'arbre 10, grâce à un logement correspondant 29 de la bague et munie de deux bras radiaux cylindriques 30 susceptibles de tourillonner dans deux manchons 31 de manière à permettre l'oscillation de la tête 1 d'où du bras 4 autour d'un axe XX' se confondant avec les pans obliques 17 et 20 en passant par son centre et situé dans l'alignement approximatif du bras 4.

Les manchons 31 sont de forme extérieure cubique et engagés librement dans des logements correspondants 32 ménagés dans la partie supérieure de la tête d'entraînement 1 et ayant une forme telle permettant leur coulissement axial dans les sens F1, F2 afin de permettre le débattement angulaire de ladite tête 1, pendant sa rotation, suivant un plan parallèle à l'arbre d'entraînement 10. L'oscillation du bras 4 ainsi que le débattement angulaire de la tête d'entraînement 1 ne s'effectuent que lorsque ladite tête 1 est entraînée en rotation sur le pan oblique 17 de la douille 15. En effet le déplacement en rotation de tous points périphériques du pan oblique 20 de la tête 1 par rapport au pan oblique 17 de la douille 15 aura pour conséquence d'élever ou de baisser ce point par rapport au plan du pare-brise, selon le sens de rotation et par conséquent de provoquer le débattement angulaire précité, en cours de rotation.

D'autre part, si l'on relie ce même point périphérique au centre du pan oblique 17 pour former un rayon compris dans l'axe XX' et que l'on déplace ce point comme précédemment, ce rayon ou l'axe XX' décrira un mouvement dont le point d'origine est fixe et son extrémité suit une pente en hélice, par rapport au pare-brise, ce qui a pour conséquence de faire osciller la tête 1 sur elle-même autour de l'axe XX' d'un côté ou de l'autre suivant le sens de rotation. La tête d'entraînement entraîne évidemment le bras 4 dans la même oscillation, modifiant ainsi l'inclinaison du balai sur le pare-brise pour tendre à assurer l'orthogonalité dudit balai sur le pare-brise.

En outre, la pente des pans obliques 17 et 20 est déterminée de manière telle que par compromis avec l'orthogonalité du balai sur le pare-brise, elle assure simultanément une pression relativement constante.

Il est bien entendu que de nombreuses modifications peuvent être apportées à ce mode de réalisation sans pour cela sortir du cadre de l'invention comme par exemple la came peut être quelconque et déterminée en fonction du pare-brise et de la pression à exercer sur le balai, mais il est évident que dans ce cas le mouvement engendré ne sera plus conique mais quelconque et déterminé pour des valeurs plus précises en tout point du pare-brise et non plus par compromis.

D'autre part, il est également évident que si l'on inverse l'orientation du pan oblique de 180° par rapport au pare-brise, le dispositif objet de l'invention sera parfaitement adapté non plus pour l'essuyage d'un pare-brise panoramique convexe mais d'une surface concave comme le sont certaines lunettes arrière de véhicule.

**Revendications**

1. Essuie-glace notamment pour véhicules automobiles comportant, une tête d'entraînement (1) sur laquelle est articulé un bras porte-balai (4), un ressort hélicoïdal (7) qui engendre la force nécessaire pour l'application du balai d'essuie-glace contre un pare-brise de forme panoramique, un arbre d'entraînement (10) à extrémité filetée (27) tourillonnant dans le fût (11) d'une platine support fixée sur la carrosserie et sur lequel arbre est fixé un entraîneur (24) de la tête (1) par l'intermédiaire d'un écrou de blocage (26), laquelle tête (1) prend appui et pivote sur une douille fixe (15) traversée par l'arbre d'entraînement (10) et comportant une came frontale (17) de manière à modifier, en cours de balayage, l'angle d'inclinaison du bras par rapport à l'arbre pour assurer automatiquement une perpendicularité de la lame (5) du balai en tout point du pare-brise quel que soit l'angle de balayage du bras caractérisé en ce que le plan d'appui de la tête d'entraînement (1) sur la came frontale (17) de la douille fixe (15) est constitué par une came complémentaire (20), cames (17 et 20) formées par deux pans obliques à l'axe de l'arbre d'entraînement (10) dont l'orientation et l'inclinaison α sont telles qu'elles engendrent respectivement une perpendicularité et une pression relativement constantes de la lame (5) en tout point du pare-brise.

2. Essuie-glace selon la revendication 1, caractérisé en ce que la douille (15) comporte sur sa face frontale un alésage dans lequel pivote un tourillon (19) creux et obtenu de matière avec la came complémentaire (20) constituant la base d'appui de la tête d'entraînement (1).

3. Essuie-glace selon la revendication 2, caractérisé en ce que le tourillon (19) comporte des moyens de retenue assurant sa retenue axiale sur la douille (15) fixe, tout en lui conservant sa libre rotation.

4. Essuie-glace selon la revendication 3, caractérisé en ce que ces moyens de retenue sont constitués par un bourrelet (21) ménagé sur la surface du tourillon (19) et en appui sur les bords internes (23) de la face frontale de la douille (15).

5. Essuie-glace selon la revendication 4, caractérisé en ce que le bourrelet (21) est obtenu par évasement de l'extrémité du tourillon (19).

6. Essuie-glace selon la revendication 1, caractérisé en ce que la douille (15) est fixée sur le fût de la platine.

7. Essuie-glace selon la revendication 1, caractérisé en ce que la tête d'entraînement (1) est sollicitée en rotation autour de l'axe de l'alésage du pan oblique de la douille par l'intermédiaire d'un entraîneur (24) fixé sur une partie conique (25) ménagée à l'extrémité de l'arbre d'entraînement (10).

8. Essuie-glace selon les revendications 1 et 7, caractérisé en ce que l'entraîneur (24) se présente sous la forme générale d'une bague (28) emmanchée sur la partie conique (25) de l'arbre d'entraînement et munie de deux bras radiaux (30) cylindriques sur lesquels tourillonnent deux manchons de forme extérieure cubique (31) engagés dans des logements (32) correspondants ménagés dans la partie supérieure de la tête d'entraînement (1) lesquels logements ayant une forme permettant le débattement (F1, F2) de ladite tête pendant sa rotation, suivant un plan parallèle à l'axe de l'arbre d'entraînement (10).

## Claims

1. A windscreen wiper, particularly for motor vehicles, including a driving head (1) on which is pivoted a wiper blade-carrying arm (4), a helicoidal spring (7) which produces the force necessary to apply the wiper blade against a windscreen of panoramic form, a drive shaft (10) having a threaded end (27) rotating in the barrel (11) of a support plate fixed on the vehicle body and on which shaft is fixed a driver (24) of the head (1) by the intermediary of a locking nut (26), which head (1) bears and pivots on a fixed sleeve 15 through which the drive shaft (10) passes and includes an end cam (17) such as to change, during the course of wiping, the angle of inclination of the arm with respect to the shaft in order to ensure automatically a perpendicularity of the wiper blade (5) at any point of the windscreen whatever may be the wiping angle of the arm characterised in that the bearing surface of the driving head (1) on the end cam (17) of the fixed sleeve (15) is constituted by a complementary cam (20), cams (17) and (20) formed by two walls oblique to the axis of the drive shaft (10) of which the orientation and inclination α are such that they produce respectively a relatively constant perpendicularity and pressure of the blade (5) at any point on the windscreen.

2. A windscreen wiper according to Claim 1 characterised in that the sleeve 15 includes at its end face an opening in which pivots a hollow journal (19) obtained integrally with the complementary cam (20) constituting the bearing base of the driving head (1).

3. A windscreen wiper according to Claim 2 characterised in that the journal (19) includes retention means ensuring its axial retention upon the fixed sleeve (15), whilst preserving its free rotation.

4. A windscreen wiper according to Claim 3 characterised in that these retention means are constituted by a rim (21) formed on the surface of the journal (19) and bearing upon the internal sides (23) of the end face of the sleeve (15).

5. A windscreen wiper according to Claim 4 characterised in that the rim (21) is obtained by flaring the end of a journal (19).

6. A windscreen wiper according to Claim 4 characterised in that the sleeve (15) is fixed on the barrel of the plate.

7. A windscreen wiper according to Claim 1 characterised in that the driving head (1) is urged to rotate about the axis of the opening of the oblique wall of the sleeve through the intermediary of a driver (24) fixed on a conical part (25) formed at the end of the drive shaft (10).

8. A windscreen wiper according to Claims 1 and 7 characterised in that the drive (24) is in the general form of a ring (28) mounted on the conical part (25) of the drive shaft and provided with two cylindrical radial arms (30) on which turn two sleeves of cubic exterior form (31) engaged in corresponding housings (32) formed in the upper part of the driving head (1) which housings having a form which permits the displacement (F1, F2) of said head, during its rotation, along a plane parallel to the axis of the drive shaft (10).

**Ansprüche**

1. Scheibenwischer-Anordnung insbesondere für Kraftfahrzeuge, umfassend einen Antriebskopf (1), an dem ein Wischarm (4) angelenkt ist, eine Schraubenfeder (7), welche die erforderliche Kraft zum Andrücken der Wischerleiste an eine in Form einer Panoramascheibe ausgebildete Windschutzscheibe erzeugt, eine mit einem Gewindeende (27) versehene Antriebswelle (10), die in dem Schaft (11) einer an der Karosserie befestigten Trägerplatte drehbar gelagert ist und an der ein Antriebselement (24) des Antriebskopfes (1) mittels einer Sicherungsmutter (26) befestigt ist, wobei der Antriebskopf (1) an einer von der Antriebswelle (10) durchsetzten feststehenden Buchse (15) anliegend sich auf dieser dreht, die eine Stirnnockenfläche aufweist, um während des Wischvorganges den Neigungswinkel des Wischarmes relativ zur Antriebswelle zu ändern und damit selbsttätig die senkrechte Ausrichtung des Wischblattes (5) der Wischleiste an jedem Punkt der Windschutzscheibe unabhängig von dem Schwenkwinkel des Wischarmes zu gewährleisten, dadurch gekennzeichnet, daß die Anlagefläche des Antriebskopfes (1) an der Stirnnockenfläche (17) der Buchse (15) von einer komplementären Nockenfläche (20) gebildet ist, wobei die beiden Nockenflächen (17 und 20) von zwei schräg zur Achse der Antriebswelle (10) gerichteten Schrägflächen gebildet sind, deren Neigungswinkel $\alpha$ so gewählt sind, daß sie an jedem Punkte der Windschutzscheibe eine senkrechte Ausrichtung und einen relativ konstanten Auflagedruck des Wischblattes (5) bewirken.

2. Scheibenwischer-Anordnung nach Anspruch 1, dadurch gekennzeichnet, daß die Buchse (15) an ihrer Stirnfläche eine Bohrung aufweist, in welcher ein Hohlzapfen (19) drehbar gelagert ist, der einstückig mit der die Anlagefläche des Antriebskopfes (1) bildenden komplementären Nockenfläche (20) ausgebildet ist.

3. Scheibenwischer-Anordnung nach Anspruch 2, dadurch gekennzeichnet, daß der Hohlzapfen (19) mit Halterungsmitteln versehen ist, die ihn axial fest, aber frei drehbar an der feststehenden Buchse 15 halten.

4. Scheibenwischer-Anordnung nach Anspruch 3, dadurch gekennzeichnet, daß die Halterungsmittel einen Flansch oder Wulst (21) an der Oberfläche des Hohlzapfens (19) umfassen, der an den Innenrändern (23) der Stirnfläche der Buchse (15) anliegt.

5. Scheibenwischer-Anordnung nach Anspruch 4, dadurch gekennzeichnet, daß der Wulst (21) durch Aufweiten des Endes des Hohlzapfens (19) hergestellt ist.

6. Scheibenwischer-Anordnung nach Anspruch 1, dadurch gekennzeichnet, daß die Buchse 15 auf dem Schaft der Trägerplatte befestigt ist.

7. Scheibenwischer-Anordnung nach Anspruch 1, dadurch gekennzeichnet, daß der Antriebskopf (1) um die Achse der Bohrung der Schrägfläche der Buchse mittels eines Antriebselementes (24) angetrieben wird, das auf einem am Ende der Antriebswelle (10) ausgebildeten konischen Abschnitt (25) befestigt ist.

8. Scheibenwischer-Anordnung nach den Ansprüchen 1 und 7, dadurch gekennzeichnet, daß das Antriebselement (24) von einem ringförmigen Element (28) gebildet ist, das auf dem konischen Abschnitt (25) der Antriebswelle sitzt und mit zwei radialen zylindrischen Armen (30) versehen ist, auf denen zwei Buchsen (31) mit einer kubischen äußeren Gestalt drehbar gelagert sind, die in korrespondierende Aussparungen (32) eingreifen, welche in dem oberen Abschnitt des Antriebskopfes (1) ausgebildet sind und eine Gestalt besitzen, die eine Schwenkbewegung (F1, F2) des Antriebskopfes während seiner Drehung in einer zur Achse der Antriebswelle (10) parallelen Ebene erlaubt.

_FIG. 1_

0 021 914

_FIG. 2_

_FIG. 3_